Europäisches Patentamt

European Patent Office

Office européen des brevets

(11) Numéro de publication: **0 026 697**
**B1**

(12) **FASCICULE DE BREVET EUROPEEN**

(45) Date de publication du fascicule du brevet: **08.05.85**

(21) Numéro de dépôt: **80401325.8**

(22) Date de dépôt: **17.09.80**

(51) Int. Cl.⁴: **G 21 C 15/18**

(54) Réacteur nucléaire dont les générateurs de vapeur sont équipés d'une capacité réserve.

(30) Priorité: **28.09.79 FR 7924221**

(43) Date de publication de la demande:
**08.04.81 Bulletin 81/14**

(45) Mention de la délivrance du brevet:
**08.05.85 Bulletin 85/19**

(84) Etats contractants désignés:
**BE DE GB IT NL SE**

(56) Documents cités:
**FR-A-2 243 498**
**FR-A-2 314 559**
**FR-A-2 334 175**
**FR-A-2 351 471**
**FR-A-2 390 810**

(73) Titulaire: **COMMISSARIAT A L'ENERGIE
ATOMIQUE Etablissement de Caractère
Scientifique Technique et Industriel
B.P. 510
F-75752 Paris Cedex 15 (FR)**

(72) Inventeur: **Fajeau, Maurice
Chemin du Saint Sépulcre
F-84120 Pertuis (FR)**

(74) Mandataire: **Mongrédien, André et al
c/o BREVATOME 25, rue de Ponthieu
F-75008 Paris (FR)**

Courier Press, Leamington Spa, England.

EP 0 026 697 B1

## Description

La présente invention concerne les réacteurs nucléaires, notamment du genre à eau pressurisée, comprenant une enceinte de pression contenant le coeur du réacteur appelée cuve, au moins un générateur de vapeur refroidissant le liquide primaire par vaporisation du liquide secondaire et une capacité réserve.

Un tel réacteur est connu notamment du document FR—A—2 243 498, dans lequel est prévu un condenseur auxiliaire muni d'un système refroidisseur refroidi par un circuit intermédiaire.

Les générateurs de vapeur utilisés dans les réacteur nucléaires à eau pressurisée peuvent être du type "à simple passe". Dans ce type de générateurs, le fluide primaire pénètre généralement par l'extrémité supérieure du générateur et en ressort par l'extrémité inférieure. Les générateurs "à simple passe" sont à comparer aux générateurs de vapeur à tubes en U, dans lesquels le fluide primaire pénètre et ressort par l'extrémité inférieure du générateur. Dans un générateur à tubes en U, la masse de fluide secondaire est relativement importante, alors qu'elle est très faible dans le cas des générateurs "à simple passe" jusqu'à 100 fois plus faible dans le cas des générateurs de vapeur compacts du type à plaques.

Si un incident conduit à stopper la pompe alimentaire du circuit secondaire, ou à fermer brutalement les vannes qui alimentent le générateur de vapeur en fluide secondaire à l'état liquide, l'évacuation de la puissance résiduelle du réacteur s'effectue par vaporisation du fluide secondaire contenu dans les générateurs de vapeur avant l'entrée en action des circuits de secours. Si la masse de fluide secondaire contenu dans les générateurs de vapeur à tubes en U est généralement suffisante pour permettre une évacuation de la puissance résiduelle pendant une période de temps suffisamment longue avant la mise en route du circuit de secours, il n'en est pas de même de la masse de fluide secondaire contenu dans les générateurs de vapeur "à simple passe". En effet, la valeur donnée précédemment à titre d'exemple montre qu'un générateur de vapeur à plaques présente une inertie pratiquement nulle.

Lorsque les générateurs de vapeur utilisés dans les réacteurs nucléaires à eau pressurisée sont du type "à simple passe", il est donc intéressant voire nécessaire, d'accroître l'inertie des générateurs de vapeur afin que l'entrée en action des circuits de secours intervienne dans des conditions favorables.

A cet effet, et conformément à l'invention, il est proposé un réacteur nucléaire du type défini précédemment et caractérisé en ce que la capacité réserve est disposée dans la boucle secondaire en parallèle sur le générateur de vapeur, et de telle corte que son enveloppe soit située sensiblement au même niveau que l'enveloppe du générateur de vapeur, cette capacité réserve étant en communication permanente avec le générateur de vapeur et contenant un volume de fluide secondaire à l'état gazeux.

Comme son nom l'indique, la capacité réserve, selon l'invention, constitue une réserve de fluide secondaire pressurisée directement par le fluide secondaire à l'état gazeux sortant du générateur de vapeur, et dont la disposition en parallèle sur ce générateur permet d'en accroître l'inertie et donc de favoriser l'évacuation de la puissance résiduelle du réacteur avant la mise en oeuvre des circuits de secours, lorsqu'un incident oblige à arrêter la pompe d'alimentation du circuit secondaire ou à isoler le générateur. En raison de la communication permanente de la capacité réserve avec le générateur de vapeur, l'évacuation de la puissance résiduelle par la capacité réserve s'effectue alors sans aucune intervention humaine.

En revanche, en cas d'accident froid, c'est-à-dire en cas de rupture d'une tuyauterie vapeur, on peut noter que la plus grande partie de la réserve se décharge sans passer par le générateur de vapeur et ne participe donc pas au refroidissement du réacteur, évitant ainsi les risques de redivergence du réacteur.

Bien entendu, cette capacité réserve est particulièrement adaptée pour être associée à un générateur "à simple passe". Cependant, l'invention n'est pas limitée à ce type de générateur et la capacité peut également être utilisée pour augmenter l'inertie d'un générateur de vapeur à tubes en U.

Selon un autre aspect de l'invention, un circuit de refroidissement comprenant un échangeur de chaleur disposé à l'intérieur de la capacité réserve et au-dessus du niveau minimal du fluide secondaire à l'état liquide est prévu pour évacuer la chaleur emmagasinée par le fluide secondaire contenu dans la capacité réserve. Ce circuit de refroidissement permet d'évacuer en continu la puissance résiduelle du réacteur et autorise donc la suppression du circuit d'alimentation de secours haute pression.

Chaque boucle secondaire comprend généralement une vanne d'alimentation du générateur de vapeur en fluide secondaire à l'état liquide, et une vanne d'alimentation de la turbine en fluide secondaire à l'état gazeux. Selon l'invention, ces vannes sont disposées dans la boucle secondaire respectivement en amont et en aval de l'ensemble constitué par le générateur de vapeur et par la capacité réserve.

Conformément à un premier mode de réalisation de l'invention, la capacité réserve est disposée à l'extérieur du générateur de vapeur.

Dans une première variante de ce mode de réalisation de l'invention, la capacité réserve communique avec la partie de la boucle secondaire entrant dans le générateur de vapeur par l'intermédiaire d'un diaphragme.

Dans une seconde variante de ce mode de réalisation de l'invention, la partie de la boucle secondaire entrant dans le générateur de vapeur comprend une trompe disposée en aval de la capacité réserve.

Dans ces deux variantes, le diaphragme et la trompe permettent de réguler le niveau du fluide dans la réserve par modification du débit d'alimentations dérivé passant par la réserve. En revanche, ni le diaphragme, ni la trompe ne constituent des moyens d'isolement entre la capacité réserve et le générateur.

Conformément à un second mode de réalisation de l'invention, lorsque le générateur de vapeur comprend une enveloppe cylindrique d'axe vertical définissant à ses extrémités deux chambres annulaires contenant le fluide primaire et reliées par un faisceau de tubes également de forme annulaire, le fluide secondaire pénétrant dans ladite enveloppe à l'état liquide par un conduit axial et en ressortant à l'état gazeux par un deuxième conduit axial, les deux conduits axiaux traversant les chambres annulaires, la capacité réserve est disposée dans l'espace central défini par le faisceau de tubes.

La capacité réserve est alors en communication à son extrémité inférieure avec l'eau d'alimentation par l'intermédiaire de trous calibrés et communique directement avec le fluide secondaire à l'état gazeux contenu dans ladite enveloppe par son extrémité supérieure.

La présente invention a également pour objet un générateur de vapeur prévu pour être utilisé dans un réacteur nucléaire de ce type.

On décrira maintenant, à titre d'exemple non limitatif, deux modes de réalisation particuliers de l'invention en se référant aux dessins annexés dans lesquels:

— la figure 1 est une vue schématique représentant une boucle primaire et une partie d'une boucle secondaire d'un réacteur nucléaire à eau pressurisée comprenant une capacité réserve conformément aux enseignements de la présente invention; et

— la figure 2 est une vue en coupe longitudinale d'un générateur de vapeur de type Trépaud, dans lequel a été disposée une capacité réserve, conformément à un second mode de réalisation de l'invention.

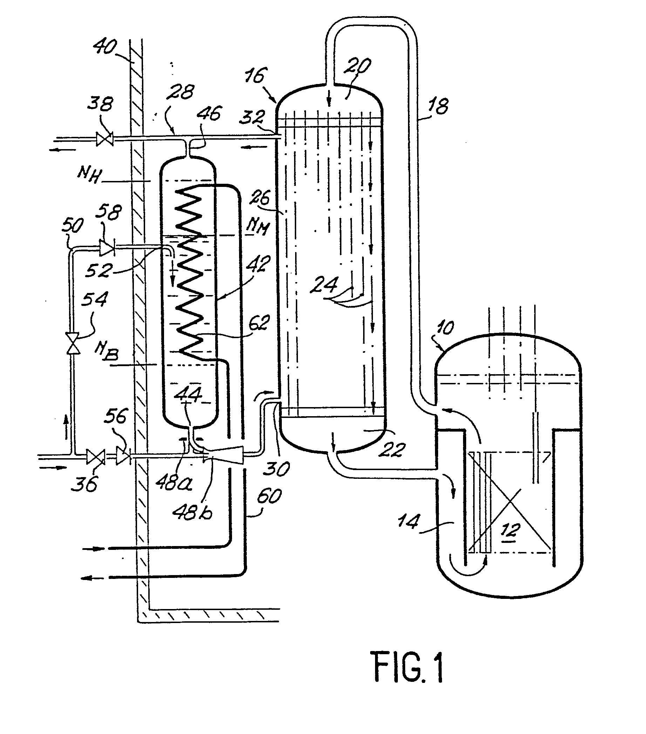

On a représenté très schématiquement sur la figure 1 l'enceinte de pression 10 d'un réacteur nucléaire à eau pressurisée dont le coeur 12, disposé à l'intérieur de l'enceinte 10, est parcouru par un fluide de refroidissement 14 qui circule dans le sens des flèches. Le fluide de refroidissement 14 assure l'extraction des calories dégagées par la fission nucléaire dans le coeur du réacteur et le transfert de ces calories jusqu'à des générateurs de vapeur 16 par plusieurs boucles primaires 18. Pour simplifier, une seule boucle primaire 18 et le générateur 16 correspondant sont représentés sur la figure 1.

Le générateur de vapeur 16 représenté sur la figure 1 est un générateur "à simple passe", dans lequel le fluide primaire pénètre par une chambre d'entrée 20 disposée à l'extrémité supérieure du générateur, et en ressort par une chambre de sortie 22 disposée à l'extrémité inférieure du générateur, après avoir traversé un faisceau de tubes représenté schématiquement en 24. Lorsque le fluide primaire parcourt le faisceau de tubes 24, il échange ses calories avec un fluide secondaire 26 circulant dans une boucle secondaire 28. En conséquence, le fluide secondaire 26, qui entre à l'état liquide par un orifice inférieur d'entrée 30 dans le générateur de vapeur 16, en ressort à l'état gazeux par un orifice supérieur de sortie 32. Le fluide secondaire à l'état gazeux sortant du générateur de vapeur 16 est acheminé par la boucle secondaire 28 vers une ou plusieurs turbines (non représentées) qu'il entraîne afin de transformer l'énergie calorifique véhiculée par le fluide 26, notamment en énergie électrique. Un condenseur (non représenté) permet de liquéfier à nouveau le fluide secondaire avant que celui-ci ne soit acheminé par le circuit 28 jusqu'à l'orifice inférieur 30 du générateur de vapeur 16. Une vanne d'alimentation 36 du générateur de vapeur 16 en fluide secondaire à l'état liquide, et une vanne d'alimentation 38 des turbines (non représentées) en fluide secondaire à l'état gazeux sont disposés dans le circuit secondaire 28, respectivement en amont et en aval du générateur de vapeur 16. De préférence, les vannes 36 et 38 sont disposées à l'extérieur de l'enceinte de confinement 40 du réacteur.

Conformément à l'invention, une capacité réserve 42 est disposée dans le circuit secondaire 28 en parallèle avec le générateur de vapeur 16 et au même niveau que ce dernier. Plus précisément, dans le mode de réalisation représenté sur la figure 1, la capacité réserve 42 est disposée à l'extérieur du générateur de vapeur 16 et elle communique avec le circuit 28 à la fois par une canalisation 44 reliant l'extrémité inférieure de la capacité 42 à la partie du circuit 28 disposée entre la vanne d'alimentation 36 et l'orifice d'entrée 30 du générateur 16, et par une canalisation 46 reliant l'extrémité supérieure de la capacité à la partie du circuit 28 située entre l'orifice de sortie 32 du générateur et la vanne 38. La partie supérieure de la capacité réserve 42 communique ainsi directement par la canalisation 46 avec le fluide secondaire à l'état gazeux sortant du générateur 16. Le fluide secondaire 26 contenu dans la capacité réserve 42 est donc pressurisé par le fluide secondaire à l'état gazeux contenu dans le générateur de vapeur 16, par suite de la communication permanente entre la capacité réserve 42 et ce dernier par les canalisations 44 et 46.

La communication entre les phases liquides du fluide secondaire contenu dans la capacité réserve 42 et dans le générateur 16, est soit limitée par un diaphragme 48a disposé dans la canalisation 44, soit augmentée par une trompe 48b disposée dans le circuit secondaire 28 entre la canalisation 44 et l'orifice inférieur 30 du générateur de vapeur 16. Bien que le diaphragme 48a et la trompe 48b soient tous deux preprésentés sur la figure 1, on comprendra qu'un seul de ces éléments est utilisé en pratique. En effet, la trompe 48b, comme le diaphragme 48a, ont pour fonction de permettre le réglage du niveau dans la réserve par action sur le débit d'alimentation dérivée, passant par la conduite 50. Ni le diaphragme 48a, ni la trompe 48b ne constituent des moyens d'isolement entre la capacité réserve et le générateur.

La conduite 50 est disposée entre le circuit secondaire 28, en amont de la vanne d'alimentation 36, et une ouverture 52 débouchant dans la capacité 42 audessus de sa partie médiane. La conduite 50 met en communication la capacité réserve avec le fluide secondaire à l'état liquide acheminé par le circuit 28. Cette communication est contrôlée par une vanne 54. En outre, deux clapets anti-retour 56 et 58 sont disposés respectivement en aval des vannes 36 et 54 dans le circuit principal 28 et dans la canalisation 50, afin d'autoriser la circulation du fluide secondaire seulement dans le sens de flèches sur la figure 1.

Afin d'évacuer les calories contenues dans la capacité réserve 42 en cas de fermeture des vannes 36, 38 et 54, un circuit de refroidissement auxiliaire 60, dans lequel circule un liquide de refroidissement approprié, comprend une partie, par exemple en forme de serpentin 62, disposée à l'intérieur de la capacité réserve 42. La partie en forme de serpentin 62 est disposée au-dessus du niveau du fluide secondaire à l'état liquide lorsque celui-ci occupe son niveau le plus bas $N_B$.

Dans le mode de réalisation représenté sur la figure 1, la capacité 42 est disposée à l'intérieur du confinement 40. Cependant, cette disposition n'est pas limitative et la capacité 42 pourrait également être disposée à l'extérieur du confinement 40.

Au cours du fonctionnement normal du réacteur, les calories dégagées par le coeur 12 sont extraites par le fluide primaire 14 et acheminées dans chacune des boucles 18 jusqu'au générateur de vapeur 16 correspondant. Le fluide secondaire circulant dans chacun des circuits 28, qui pénètre à l'état liquide par l'orifice inférieur 30 de chacun des générateurs 16, en ressort à l'état gazeux par l'orifice supérieur 32. Il entraîne alors des turbines associées par exemple à des génératrices électriques (non représentées).

En raison de la communication directe de la partie supérieure de la capacité 42 avec la partie du circuit secondaire 28 située en aval de l'orifice de sortie 32 du générateur de vapeur 16, le fluide secondaire à l'état liquide se trouvant à l'intérieur de la capacité 42 est à la pression du fluide secondaire à l'état gazeux sortant du générateur de vapeur 46. Le niveau du fluide secondaire à l'état liquide qui se trouve à l'intérieur de la capacité 42 peut donc être maintenu à un niveau de consigne, ou niveau moyen $N_M$, en agissant sur la vanne 54, compte tenu de l'existence du diaphragme ou de la trompe dans la communication entre les parties intérieures de la réserve et du générateur de vapeur.

Dans l'hypothèse de la fermeture de la vanne 38, il y a arrêt d'urgence de la réaction nucléaire et fermeture des vannes 36 et 54. Dans ce cas, la puissance résiduelle du circuit primaire sert à chauffer l'eau secondaire à la fois du générateur de vapeur 16 et de la capacité 42, augmentant ainsi les délais nécessaires de mise en route du circuit de refroidissement 60 qui condense la vapeur de la capacité 42 par l'intermédiaire du serpentin 62. Le niveau du fluide secondaire à l'état liquide contenu dans la capacité est donc maintenu constant. La puissance résiduelle acheminée jusqu'au générateur de vapeur 16 par le fluide primaire 14 est ainsi transférée par ce générateur au fluide secondaire 26, puis, par circulation naturelle de ce fluide, à la capacité réserve 42, d'où elle est évacuée par le circuit de refroidissement 60.

Dans l'hyphotèse de l'arrêt de la pompe d'alimentation, il y a arrêt d'urgence de la réaction nucléaire puis fermeture de la vanne 38 avant d'atteindre la niveau bas dans la réserve. On est donc ramené au cas précédent.

Dans l'hypothèse de la rupture de la branche 28 il y a dépressurisation simultanée du générateur de vapeur 16 et de la capacité 42. Une fraction seulement de la masse totale d'eau secondaire passe donc par le générateur de vapeur et le refroidissement du circuit primaire reste limité, évitant une redivergence de la réaction nucléaire.

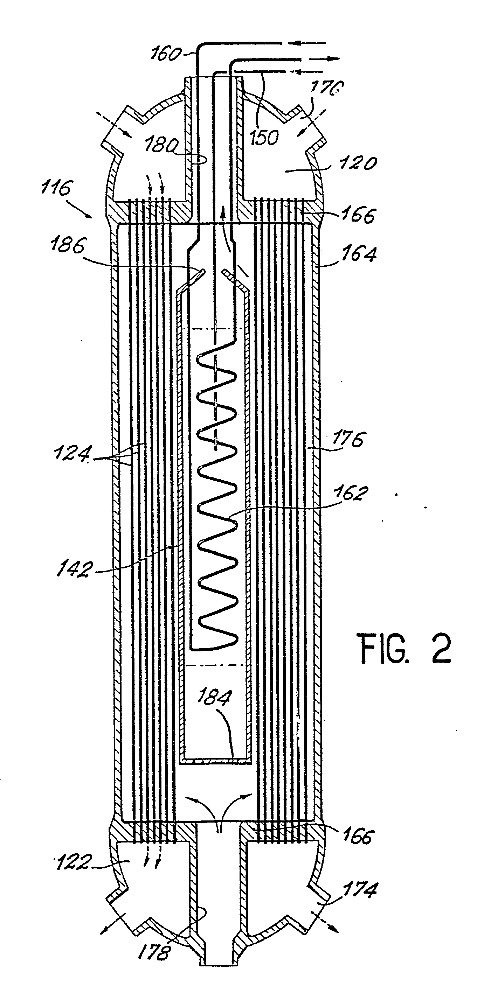

Dans le mode de réalisation de la figure 2, on a représenté isolément un générateur de vapeur 116 prévu pour assurer un transfert de chaleur entre une boucle primaire et une boucle secondaire d'un réacteur nucléaire à eau pressurisée du même type que celui qui vient d'être décrit en se référant à la figure 1. Ce mode de réalisation diffère cependant du précédent par le fait que la capacité réserve 142 est disposée en parallèle sur le générateur de vapeur 116 directement à l'intérieur de celui-ci.

Plus précisément, le générateur de vapeur 116 est un générateur de type Trépaud. Ainsi, il comprend une enveloppe cylindrique d'axe vertical 164 comportant une partie centrale tubulaire, et deux extrémités hémisphériques. La partie centrale de l'enveloppe 164 est séparée de chacune des extrémités hémisphériques par deux cloisons 166 qui définissent à l'intérieur de l'enveloppe 164 une chambre d'entrée 120 et une chambre de sortie 122 du fluide primaire, et une chambre intermédiaire 176. Les chambres d'entrée 120 et de sortie 122 du fluide primaire sont disposées respectivement aux extrémités supérieure et inférieure du générateur de vapeur. Elles communiquent avec le circuit primaire par des orifices d'entrée et de sortie 170 et 174, respectivement. La chambre intermédiaire 176 communique avec le circuit secondaire par des conduits axiaux d'entrée 178 et de sortie 180 qui traversent respectivement les chambres 122 et 120, de telle sorte que chacune de ces chambres présente une forme annulaire.

Un faisceau de tubes 124 parallèles à l'axe du générateur 116 met en communication la chambre d'entrée 120 avec la chambre de sortie 122. Le faisceau de tubes 124 présente également une forme annulaire, et il définit un espace central dans lequel est reçue, conformément à l'invention, la capacité réserve 142.

Dans ce mode de réalisation, la capacité réserve 142 est en communication à sa partie inférieure avec le fluide secondaire par l'intermédiaire de trous calibrés 184. La cloison supérieure de la capacité 142, de forme tronconique, est percée en son centre d'une ouverture 186, disposée dans le prolongement du conduit axial 180, et par laquelle elle communique avec la partie supérieure de la chambre 176. C'est de préférence par cette ouverture qu'il faut amener au moyen de la conduite 150, le fluide secondaire de la réserve. Comme dans le mode de réalisation précédent, on a prévu un circuit de refroidissement 160 comprenant un serpentin 162 disposé à l'intérieur de la capacité réserve 142 pour assurer le refroidissement du fluide secondaire contenu dans cette capacité.

Le fonctionnement d'un réacteur nucléaire comprenant des générateurs de vapeur du type de celui qui vient d'être décrit en se référant à la figure 2 est identique au fonctionnement du réacteur décrit en se référant à la figure 1 et ne sera pas décrit en détail.

Bien entendu, l'invention n'est pas limitée aux modes de réalisation qui viennent d'être décrits à titre d'exemple, mais en couvre toutes les variantes.

**Revendications**

1. Réacteur nucléaire comprenant une enceinte de pression ou cuve (10) contenant le coeur (12) du réacteur, au moins un génétateur de vapeur (16, 116) et une capacité réserve (42, 142), caractérisé en ce que la capacité réserve (42, 142) est disposée dans la boucle secondaire (28) en parallèle sur le générateur, et de telle sorte que son enveloppe soit située sensiblement au même niveau que l'enveloppe du générateur de vapeur, cette capacité réserve étant en communication permanente avec le générateur de vapeur et contenant un volume de fluide secondaire à l'état liquide surmonté par un volume de fluide secondaire à l'état gazeux.

2. Réacteur nucléaire selon la revendication 1, caractérisé en ce qu'un circuit de refroidissement (60, 160) travaillant en circulation naturelle ou forcée et comprenant un échangeur de chaleur (62, 162) disposé à l'intérieur de la capacité réserve (42, 142) et au-dessus du niveau minimal ($N_B$) du fluide secondaire à l'état liquide est prévu pour évacuer la puissance résiduelle du coeur transmise au fluide secondaire contenu dans la capacité réserve par l'intermédaire du générateur de vapeur.

3. Réacteur nucléaire selon l'une quelconque des revendications 1 ou 2, la boucle secondaire (28) comprenant une vanne d'alimentation (36) du générateur de vapeur (16, 116) en fluide secondaire à l'état liquide et une vanne d'alimentation (38) de la turbine en fluide secondaire à l'état gazeux, caractérisé en ce que lesdites vannes sont disposées dans la boucle secondaire (28) respectivement en amont et en aval de l'ensemble constitué par le générateur de vapeur et la capacité réserve.

4. Réacteur nucléaire selon l'une quelconque des revendications 1 à 3, caractérisé en ce que la capacité réserve (42) est disposée a l'extérieur du générateur de vapeur (16).

5. Réacteur nucléaire selon la revendication 4, caractérisé en ce que les parties inférieures de la capacité réserve et du générateur de vapeur communiquent par l'intermédiaire d'un diaphragme (48a), limitant le débit allant de la capacité au générateur de vapeur.

6. Réacteur nucléaire selon la revendication 4, caractérisé en ce que les parties intérieures de la capacité réserve et du générateur de vapeur communiquent par l'intermédiaire d'une trompe (48b) augmentant le débit allant de la capacité au générateur de vapeur.

7. Réacteur nucléaire selon l'une quelconque des revendications 4 à 6, prise en combinaison avec la revendication 3, caractérisé en ce que la capacité réserve (42) communique avec la boucle secondaire (28) en amont de la vanne d'alimentation (36) du générateur de vapeur par une conduite (50) contrôlée par une vanne (54) de réglage du niveau du fluide secondaire à l'état liquide dans la capacité réserve.

8. Réacteur nucléaire selon la revendication 7, caractérisé en ce qu'un clapet de non retour (56, 58) est disposé en aval de la vanne d'alimentation (36) du générateur de vapeur et en aval de la vanne (54) de réglage de niveau.

9. Réacteur nucléaire selon l'une quelconque des revendications 1 à 3, dans lequel le générateur de vapeur (116) comprend une enveloppe cylindrique (164) d'axe vertical définissant à ses extrémités deux chambres annulaires (120, 122) contenant le fluide primaire et reliées par le faisceau de tubes (124) également de forme annulaire, le fluide secondaire pénétrant dans ladite enveloppe à l'état liquide et en ressortant à l'état gazeux par deux conduits axiaux (178, 180) traversant les chambres annulaires, caractérisé en ce que la capacité réserve (142) est disposée dans l'espace central défini par le faisceau de tubes (124).

10. Réacteur nucléaire selon la revendication 9, caractérisé en ce que la capacité réserve communique à son extrémité inférieure par des trous calibrés (184) avec le fluide secondaire d'alimentation à l'état liquide et communique directement avec le fluide secondaire à l'état gazeux contenu dans ladite enveloppe (164) par son extrémité supérieure (186).

11. Générateur de vapeur comprenant une enveloppe cylindrique (164) d'axe vertical, définissant à ses extrémités deux chambres annulaires (120, 122) contenant un fluide primaire et reliées par un faisceau de tubes (124) également de forme annulaire, deux conduits axiaux (178, 180) traversant les chambres annulaires pour permettre à un fluide secondaire de pénétrer dans ladite enveloppe à l'état liquide et d'en ressortir à l'état gazeux, caractérisé en ce qu'une capacité réserve (142) est disposée dans l'espace central défini par le faisceau de tubes (124), cette capacité réserve contenant un volume de fluide secondaire à l'état liquide en communication permanente avec le fluide secondaire à l'état liquide contenu dans ladite enveloppe, ledit volume étant surmonté par un volume de fluide secondaire à l'état gazeux en communication permanente avec le fluide secondaire à l'état gazeux contenu dans ladite enveloppe.

12. Générateur de vapeur selon la revendication 11, caractérisé en ce que ladite capacité réserve est ouverte à son extrémité supérieure (186) et munie de trous calibrés (184) à son extrémité inférieure.

13. Générateur de vapeur selon l'une quelconque des revendications 11 et 12, caractérisé en ce qu'il comprend de plus un échangeur de chaleur (162) relié à un circuit de refroidissement (160) et disposé à l'intérieur de la capacité réserve (142) au-dessus du niveau minimal ($N_B$) de fluide secondaire à l'état liquide dans ladite capacité.

**Patentansprüche**

1. Kernreaktor, enthaltend eine Druckzelle oder -gefäß (10), das den Reaktorkern (12) aufnimmt, wenigstens einen Dampferzeuger (16, 116) und einen Reserveinhalt (42, 142), dadurch gekennzeichnet, daß der Reserveinhalt (42, 142) in dem Sekundärkreis (28) parallel zum Dampferzeuger so angeordnet ist, daß seine Hülle im wesentlichen im gleichen Höhenniveau wie die Hülle des Dampferzeugers angeordnet ist, wobei der Reserveinhalt in ständiger Verbindung mit dem Dampferzeuger steht und ein Sekundärfluidvolumen in Füssigem Zustand enthält, über welchem sich ein Sekundärfluidvolumen von gasförmigem Zustand befindet.

2. Kernreaktor nach Anspruch 1, dadurch gekennzeichnet, daß ein Rückkühlkreislauf (60, 160), der mit Schwerkraft- oder Zwangszirkulation arbeitet und einen Wärmetauscher (62, 162) enthält, im Innern des Reserveinhalts (42, 142) und oberhalb des Minimalpegels ($N_B$) des Sekundärfluides flüssigen Zustandes angeordnet ist, um die Restleistung des Kerns, die auf das in dem Reserveinhalt enthaltenen Sekundärfluid übertragen ist, mit Hilfe des Dampferzeugers abzuziehen.

3. Kernreaktor nach einem der Ansprüche 1 oder 2, bei dem der Sekundärkreis (28) einen Schieber (36) zum Versorgen des Dampferzeugers (16, 116) mit Sekundärfluid in flüssigem Zustand und einen Schieber (38) zum Versorgen der Turbine mit einem Sekundärfluid gasförmigen Zustands aufweist, dadurch gekennzeichnet, daß die Schieber in dem Sekundärkreis (28) stromaufwärts und stromabwärts der Baugruppe angeordnet sind, die von dem Dampferzeuger und dem Reserveinhalt gebildet ist.

4. Kernreaktor nach einem der Ansprüche 1 bis 3, dadurch gekennzeichnet, daß der Reserveinhalt (42) außerhalb des Dampferzeugers (16) angeordnet ist.

5. Kernreaktor nach Anspruch 4, dadurch gekennzeichnet, daß die unteren Bereiche des Reserveinhalts und des Dampferzeugers mittels eines Diaphragmas (48a) miteinander in Verbindung stehen, das die Abgabe aus dem Reserveinhalt in den Dampferzeuger begrenzt.

6. Kernreaktor nach Anspruch 4, dadurch gekennzeichnet, daß die unteren Bereiche des Reserveinhalts und des Dampferzeugers miteinander durch eine Trompe (48b) in Verbindung stehen, die die Abgabe aus dem Reserveinhalt in den Dampferzeuger steigert.

7. Kernreaktor nach einem der Ansprüche 4 bis 6 kombiniert mit Anspruch 3, dadurch gekennzeichnet, daß der Reserveinhalt (42) mit dem Sekundärkreis (28) stromaufwärts von dem Zuführschieber (36) zum Dampferzeuger über eine Lietung (50) in Verbindung steht, die von einem Regelschieber (54) für den Sekundärfluidpegel flüssigen Fluids im Reserveinhalt gesteuert ist.

8. Kernreaktor nach Anspruch 7, dadurch gekennzeichnet, daß ein Rückschlagventil (56, 58) stromabwärts vom Zuführschieber (36) zum Dampferzeuger und stromabwärts vom Pegelregelschieber (54) angeordnet ist.

9. Kernreaktor nach einem der Ansprüche 1 bis 3, bei dem der Dampferzeuger (116) eine zylindrische Hülle (164) mit vertikaler Achse aufweist, die an ihren Enden zwei ringförmige Kammern (120, 122) ausbildet, die das Primärfluid enthalten und die mit dem Rohrbündel (124) von ebenfalls ringförmiger Gestalt verbunden sind, wobei das Sekundärfluid in die genannte Hülle durch zwei Leitungen (178, 180) in flüssigem Zustand eintritt und in gasförmigem Zustand austritt und dabei die ringförmigen Kammern durchquert, dadurch gekennzeichnet, daß der Reserveinhalt (142) in dem mittleren Raum angeordnet ist, der von dem Rohrbündel (124) gebildet ist.

10. Kernreaktor nach Anspruch 9, dadurch gekennzeichnet, daß der Reserveinhalt an seinem unteren Ende über kalibrierte Löcher (184) mit dem in flüssigem Zustand zugeführten Sekundärfluid in Verbindung steht und an seinem oberen Ende mit dem Sekundärfluid gasförmigen Zustands, das in der Hülle (164) enthalten ist, direkt in Verbindung steht.

11. Dampferzeuger mit einer zylindrischen Hülle (164) vertikaler Achse, der an seinen Enden zwei ringförmige Kammern (120, 122) ausbildet, die ein Primärfluid enthalten und über ein Rohrbündel (124) von ebenfalls ringförmiger Gestalt miteinander verbunden sind, wobei zwei axiale Leitungen (178, 180) die ringförmigen Kammern durchqueren, um es einem Sekundärfluid zu erlauben, in die Hülle in flüssigem Zustand einzutreten und in gasförmigem Zustand wieder zu verlassen, dadurch gekennzeichnet, daß ein Reserveinhalt (142) in dem mittleren Raum enthalten ist, der von dem Rohrbündel (124) gebildet ist, daß dieser Reserveinhalt ein Volumen von Sekundärfluid flüssigen Zustands enthält, das ständig mit dem Sekundärfluid flüssigen Zustands in Verbindung steht, das in der Hülle enthalten ist, und daß über dem genannten Volumen ein Volumen an Sekundärfluid gasförmigen Zustands enthalten ist, das in ständiger Verbindung mit dem Sekundärfluid gasförmigen Zustands steht, das in der genannten Hülle enthalten ist.

12. Dampferzeuger nach Anspruch 11, dadurch gekennzeichnet, daß der genannte Reserveinhalt an seinem oberen Ende (186) offen und mit kalibrierten Löchern (184) an seinem unteren Ende versehen ist.

13. Dampferzeuger nach einem der Ansprüche 11 und 12, dadurch gekennzeichnet, daß er darüberhinaus einen Wärmetauscher (162) aufweist, der an einen Rückkühlkreis (160) angeschlossen ist und der im Innern des Reserveinhalts (142) oberhalb des Minimalpegels (N_B) des Sekundärfluides flüssigen Zustands in dem genannten Reserveinhalt angeordnet ist.

## Claims

1. Nuclear reactor comprising a pressure vessel (10) containing the reactor core (12), at least one steam generator (16, 116) and a reserve capacity (42, 142), characterized in that the reserve capacity (42, 142) is located in the secondary loop (28) in parallel with the generator, and whereby its shell is located substantially at the same level as the shell of the steam generator, said reserve capacity being in permanent communication with the steam generator, and containing a volume of secondary fluid in the liquid state, beneath a volume of secondary fluid in the gaseous state.

2. Nuclear reactor according to Claim 1, characterized in that a cooling circuit (60, 160) operating by natural or forced circulation, and comprising a heat exchanger (62, 162) disposed internally of the reserve capacity (42, 142) and above the minimal level (N_B) of secondary fluid in the liquid state, is provided to remove residual power of the core transmitted to the secondary fluid contained in the reserve capacity through the steam generator.

3. Nuclear reactor according to either of Claims 1 and 2, the secondary loop (28) comprising a supply valve (36) for feeding secondary fluid in the liquid state to the steam generator (16, 116) and a supply valve (38) for feeding secondary fluid in the gaseous state to a turbine, characterized in that said valves are located in the secondary loop (28) respectively upstream and downstream of the assembly comprising the steam generator and the reserve capacity.

4. Nuclear reactor according to any one of Claims 1 to 3, characterized in that the reserve capacity (42) is located externally of the steam generator (16).

5. Nuclear reactor according to Claim 4, characterized in that the lower parts of the reserve capacity and of the steam generator are in communication through a diaphragm (48a) limiting the flow moving from the capacity to the steam generator.

6. Nuclear reactor according to Claim 4, characterized in that the lower parts of the reserve capacity and of the steam generator are in communication by means of a flared portion (48b) increasing the flow from the capacity to the steam generator.

7. Nuclear reactor according to any one of Claims 4 to 6, taken in combination with Claim 3, characterized in that the reserve capacity (42) communicates with the secondary loop (28) upstream of the supply valve (36) of the steam generator by a conduit (50) controlled by a valve (54) for regulating the level of secondary fluid in the liquid state in the reserve capacity.

8. Nuclear reactor according to Claim 7, characterized in that a non-return valve (56, 58) is disposed downstream of the supply valve (36) of the steam generator, and downstream of the fluid level control valve (54).

9. Nuclear reactor according to any one of Claims 1 to 3, in which the steam generator (116) comprises a cylindrical shell (164) with a vertical axis, having at its ends two annular chambers (120, 122) containing the primary fluid and connected by a tube bundle (124) also of annular form, the secondary fluid entering said shell in the liquid state and leaving in the gaseous state through two axial conduits (178, 180) passing through the annular chambers, characterized in that the reserve capacity (142) is located within the central space defined by the tube bundle (124).

10. Nuclear reactor according to Claim 9, characterized in that the reserve capacity communicates at its lower end through restricted ports (184) with the secondary fluid supply in the liquid state, and communicates directly at its upper end (186) with the secondary fluid in the gaseous state contained within said shell (164).

11. Steam generator comprising a cylindrical shell (164) with a vertical axis, defining at its ends two annular chambers (120, 122) containing a primary fluid and connected by a tube bundle (124) also in annular form, two axial conduits (178, 180) passing through the annular chambers to permit a secondary fluid to enter said shell in liquid state and leave it in the gaseous state, characterized in that a reserve capacity (142) is located within the central space defined by the tube bundle (124), said reserve capacity containing a volume of secondary fluid in the liquid state in permanent communication with the secondary fluid in liquid state contained within said shell, said volume lying under a volume of secondary fluid in the gaseous state in permanent communication with the secondary fluid in gaseous state contained within said shell.

12. Steam generator according to Claim 11, characterized in that said reserve capacity is open at its upper end (186) and has restricted ports (184) at its lower end.

13. Steam generator according to either one of Claims 11 and 12, characterized in that it additionally comprises a heat exchanger (162) connected to a cooling circuit (160) and located inside the reserve capacity (142) above the minimal level (N_B) of secondary fluid in the liquid state in said capacity.

FIG.1

0 026 697

FIG. 2